# EUROPÄISCHE PATENTSCHRIFT

(11) **EP 3 419 897 B1**
(45) Veröffentlichungstag und Bekanntmachung des Hinweises auf die Patenterteilung: **19.02.2020**
(21) Anmeldenummer: 17707467.1
(22) Anmeldetag: 23.02.2017
(51) Int. Cl.: B64D 17/30

(54) **SICHERHEITSSYSTEM FÜR EIN GLEITSCHIRMGURTZEUG**
SAFETY SYSTEM FOR A PARAGLIDER STRAP ASSEMBLY
SYSTÈME DE SÉCURITÉ POUR UN HARNAIS DE PARAPENTE

(30) Priorität: 23.02.2016 DE 202016001193 U
(43) Veröffentlichungstag der Anmeldung: 02.01.2019
(73) Patentinhaber: Swing Flugsportgeräte GmbH, 82290 Landsberied (DE)
(72) Erfinder: WÖRL, Günther, 82290 Landsberied (DE)
(74) Vertreter: Laufhütte, Dieter
(86) Internationale Anmeldenummer: PCT/EP2017/000257
(87) Internationale Veröffentlichungsnummer: WO 2017/144178

(56) Entgegenhaltungen:
- CN-A- 101 927 066
- DE-U1-202013 009 487
- KR-A- 20110 107 048
- KR-B1- 101 240 881

## Beschreibung

Die Erfindung betrifft ein Sicherheitssystem für ein Gleitschirmgurtzeug mit einem Aufprallschutzelement und einem im Gurtzeug integrierten Rettungsschirm.

Die KR20110107047 zeigt ein Gleitschirmgurtzeug mit einem aufblasbaren Airbag.

Aus der DE 20 2013 009 487 U1 sind bereits Gleitschirmgurtzeuge bekannt, die am Rücken- und Unterteil große Stauräume aufweisen, welche zur Formgebung, als Stauraum und als Luftkissen im Falle eines Aufpralls genutzt werden. Diese Stauräume werden entweder durch formgebende Schaumstoffformteile oder durch den im Flug entstehenden Fahrtwind über spezielle Einlassöffnungen gefüllt, sodass sich ein Aufprallschutzelement in Form eines gefüllten Luftsacks bildet.

Ein derartiges Aufprallschutzelement ist Teil eines gesetzlich vorgeschriebenen Rettungssystems zum Schutz eines Gleitschirmpiloten. Es besteht nicht nur aus diesem Aufprallschutzelement, das auch als Protektor bezeichnet wird, sondern auch zusätzlich aus einem Rettungsschirm, der ebenfalls am oder im Gurtzeug angeordnet ist. Bei den bekannten Gurtzeugen muss der Pilot einen derartigen Rettungsschirm im Notfall mit hohem Kraftaufwand vom Körper weg werfen. Dabei benötigt der Rettungsschirm ca. 2 bis 3 Sekunden zur Öffnung, was einem Höhenverlust von 30 bis 50 m innerhalb dieser Zeitspanne entspricht. Der Rettungsschirm trägt dann den Piloten mit Sinkwerten von 5 bis 6 m/s. Dieser Sinkwert des Piloten verhindert schwere Verletzungen.

Für den Fall, dass der Pilot beim Landen mit dem Rettungsschirm beispielsweise bei unruhigen Windverhältnissen in eine Pendelbewegung kommt, schützt das im Gurtzeug vorhandene Aufprallschutzelement. Da dieses in üblicher Weise nur aus Schaumstoff und/oder aus einem mit Staudruck gefüllten Luftsack besteht, genügt es lediglich den Mindestanforderungen der gesetzlichen Bestimmungen für den Aufprallschutz. Diese gesetzlichen Bestimmungen berücksichtigen aber nur den in der Realität nur ganz selten vorkommenden Idealfall eines Aufpralls, bei dem der Aufprall selbst nur über die Körperhochachse stattfindet. Der in der Praxis häufig vorkommende Aufprall mit seitlicher Komponente wird dagegen nicht abgefangen. Gerade dieser seitliche Aufprall führt aber nach der Unfallstatistik immer noch zu sehr schweren Verletzungen.

Ein weiterer Nachteil des vorbekannten Sicherheitssystems besteht darin, dass in einigen Notsituationen, wie beispielsweise einem Spiralsturz, der Pilot durch die auftretenden G-Kräfte oder durch Ermüdung nach mehrstündigem Flug körperlich so beeinträchtigt ist, dass er nicht mehr in der Lage ist, den Rettungsschirm in vollem Umfang auszulösen. Dabei kann einerseits das Problem darin bestehen, dass in der Notsituation der Griff für die Auslösung des Rettungsschirms unerreichbar fern liegt, zum anderen besteht das Problem, dass der Pilot gegebenenfalls nicht mehr in der Lage ist, eine vollständige Auslösung des Rettungsschirms zu bewirken. Dabei ist vor allem die Auslösungshöhe entscheidend. Ein herkömmliches Rettungssystem benötigt für seine Öffnung und nachfolgende Stabilisierung ca. 100 m Fallhöhe. Alle Notsituationen unter einer Höhe von 100 m sind daher besonders kritisch.

Schließlich besteht bei den vorhandenen Aufprallschutzelementen das Problem, dass sie bei einem Sturz oder hartem Aufprall auf dem Boden nicht immer die Energie hinreichend absorbieren können. Gerade bei den Staudruckprotektoren ist vor allem die mangelnde Befüllung des Volumens durch einen niedrigen Staudruck bei geringer Vorwärtsfahrt problematisch. Die aus Schaumstoff gebildeten Aufprallschutzelemente haben dagegen den Nachteil, dass sie ein großes Transportvolumen benötigen und ein relativ hohes Gewicht besitzen. Aufgrund ihres großen Volumens schränken sie auch die Bewegungsfreiheit des Piloten ein.

Die Aufgabe der vorliegenden Erfindung besteht darin, ein Sicherheitssystem für einen Gleitschirmgurtzeug noch sicherer zu machen, wobei insbesondere auch Abstürze aus niedrigen Flughöhen und in der Start- bzw. Landephase berücksichtigt werden.

Erfindungsgemäß wird die vorgenannte Aufgabe durch die Kombination der Merkmale des Anspruchs 1 gelöst.

Erfindungsgemäß ist also ein luftgefüllter Airbag zusätzlich zu einem Aufprallschutzelement vorgesehen. Dieses Airbagsystem ist nun nicht mehr von dem Staudruck, der während des Flugs erzeugt wird, abhängig, sondern wird von einem gesondert vorgesehen Energiesystem befüllt. Dieses kann ein Gebläse, eine Kartusche mit einem pyrotechnischen Treibsatz oder ähnliches sein.

Besondere Ausgestaltungen der Erfindung ergeben sich aus den an den Hauptanspruch anschließenden Unteransprüchen. So besteht das Airbagsystem aus mehreren aufblasbaren Kammern, die bei ihrer Entfaltung unter dem Gurtzeug und jeweils seitlich von diesem angeordnet sind.

Nach entsprechendem Aufblasen der drei Volumenkörper schützen sie den Pilot also von unten und seitlich. Vorteilhaft erfolgt bei der Aktivierung des Airbagsystems daher zunächst das Aufblasen der Hauptkammer unter dem Gurtzeug, bevor die seitlich von diesem angeordneten Seitenkammern aufgeblasen werden. Damit wird der Körper des Piloten zunächst in der Hauptaufschlagachse gesichert. Erst leicht zeitverzögert werden dann die seitlichen Airbagkammern aufgeblasen. Gemäß einer besonders vorteilhaften Ausgestaltung sind die Hauptkammer und die Seitenkammern des Airbagsystems miteinander verbunden, beispielsweise vernäht, wobei mehrere Durchlassöffnungen für einen Druckausgleich zwischen der Hauptkammer und den Seitenkammern sorgen. Diese ventilartigen Durchlassöffnungen sorgen nun vorteilhaft für die entsprechende Zeitverzögerung.

Erfindungsgemäss besteht das Aufprallschutzelement aus Schaumstoff. In diesem ist vorzugsweise eine Ausnehmung vorgesehen, in welcher das Gebläse angeordnet ist, welches mit den aufblasbaren Kammern des Airbagsystems in Strömungsverbindung steht. Zusätzlich zu dem vorhandenen Airbagsytems kann ein Aufprallschutzelement aus Schaumstoff verwendung finden, das verglichen zu den konventionellen Aufprallschutzelementen nicht mehr so voluminös ausgestaltet werden muß. Es kann hier also wesentlich kleiner konzipiert werden, sodass es zu einem geringeren Packmaß führt.

Gemäß einem weiteren Vorteil der Erfindung ist bevorzugt mittig am Gurtzeug bezogen auf die Sitzposition des Piloten bzw. Nutzers ein Aktivierungselement zur Auslösung des Airbags vorgesehen. Dieses ist auch in schwierigen Flugsituationen, in denen der Pilot Orientierungsschwierigkeiten hat, einfach und sicher für ihn erreichbar. Optional ist auch eine elekronische und/oder sensorgesteuerte Aktivierung (inkl. GPS) möglich.

Gemäß einer besonders vorteilhaften Ausgestaltung der Erfindung ist das Airbagsystem so im Gurtzeug angeordnet, dass es bei seiner Entfaltung gleichzeitig den Fallschirm, der zusammengelegt im Gurtzeug angeordnet ist, aus dem Gurtzeug herausdrückt, sodass sich dieser entfalten kann.

Gemäß einer anderen bevorzugten Ausgestaltung der Erfindung ist im Gurtzeug ein Hilfsfallschirm angeordnet, der über einen Energiespeicher, beispielsweise in Form einer Feder, pyrotechnisch oder über Gasdruck aktivierbar ist. Über den Hilfsfallschirm wird dann nach dessen Entfaltung sehr schnell der Rettungsschirm oder Hauptfallschirm aus dem Gurtzeug herausgezogen und gestreckt. Zur schnellen und effektiven Ausbringung des Hilfsfallschirms hängt dieser vorzugsweise an einem aus Kunststoff bestehenden Projektil, dass über den Energiespeicher aus dem Gurtzeug herausschließbar ist, wobei dieser noch weiter vorteilhaft nach Streckung der Hilfsschirmleinen vom Projektil trennbar ist.

Zusätzlich ist der Rettungsschirm vorteilhaft in einem Container im Gurtzeug verstaut, der zum Schutz des Rettungsschirms beim alltäglichen Gebrauch des Gurtzeugs, in welchem dieser ja im Regelfall nicht zum Einsatz kommt, dient. Zusätzlich kann der Rettungsschirm durch die Gurtzeughülle geschützt werden.

Weitere Merkmale, Einzelheiten und Vorteile der Erfindung werden anhand eines in der Zeichnung dargestellten Ausführungsbeispiels näher erläutert. Es zeigen:
- Fig. 1:: eine vereinfachte Schnittdarstellung durch eine erste Ausführungsform eines erfindungsgemäßen Gurtzeugs für einen hier nicht mehr dargestellten Gleitschirm mit einem Piloten.
- Fig. 2:: eine schematische Darstellung des Gurtzeugs gemäß Figur 1 von hinten mit aufgeblasenem Airbag,
- Fig. 3:: eine seitliche Darstellung des Sicherheitssystems nach Figur 1 in verschiedenen schematischen Darstellungen zur Erläuterung.
- Fig. 4,4a:: das Gleitschirmgurtzeug gemäß der Ausführungsform nach Figur 1 mit sich entfaltendem und entfaltetem Hilfsfallschirm und Rettungsschirm.

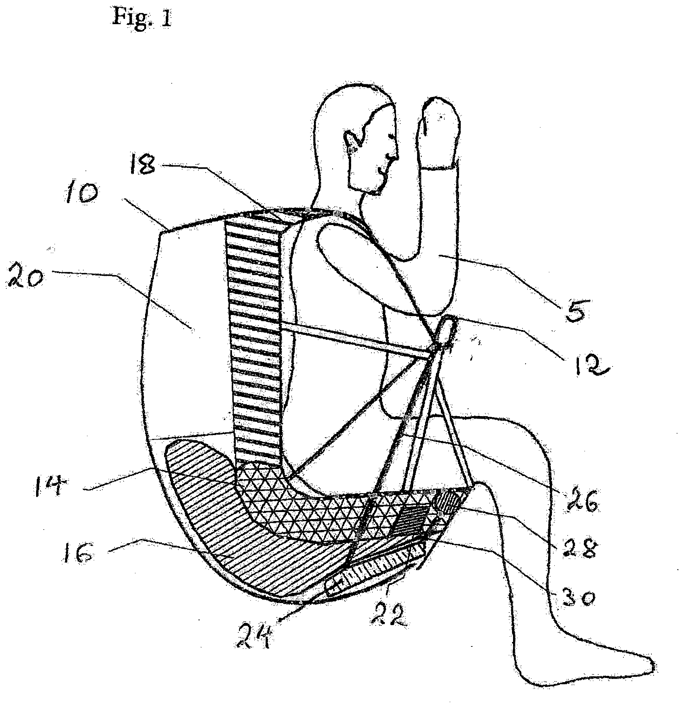

In der Figur 1 dargestellten Ausführungsform des erfindungsgemäßen Sicherheitssystems sitzt ein Pilot 5 in einem Gurtzeug 10 eines hier nicht näher dargestellten Gleitschirms, der über eine Hauptaufhängung 12 über hier nicht näher dargestellte Leinen mit dem hier ebenfalls nicht dargestellten Gleitschirm -verbunden ist. Das Gurtzeug umfasst zunächst ein aus Schaumstoff bestehendes Aufprallschutzelement 14, das, wie hier dargestellt, die Form einer Sitzschale aufweist.

Im Vergleich zu herkömmlichen Aufprallschutzelementen aus weichem Schaumstoff kann durch die Wahl eines Hartschaumstoffs die Bauhöhe reduziert werden. Gleichzeitig erfüllt dieses in Sitzschalenform ausgebildete Aufprallschutzelement die gesetzlichen Erfordernisse und ist ebenfalls leichter als konventionelle Schaumstoffe. Um den Schutz weiter zu erhöhen dient das Airbagsystem zur zusätzlichen Reduzierung der Aufprallenergie auf den Piloten. Das Gurtzeug weist weiter in an sich bekannter Weise eine Luftkammer 18 und einen Stauraum 20 auf. Die Luftkammer 18 kann in einer weiteren Ausprägung (hier nicht dargestellt) aktiv mit Luft gefüllt werden.

Der Airbag 16 kann im Ernstfall durch einen hier in der Zeichnung nicht dargestellten bevorzugt mittig vom Gurtzeug angebrachten Griff ausgelöst werden. Hierdurch wird ein Gebläse 22 aktiviert, das in dem sitzschalenförmigen Aufprallschutzelement 14 angeordnet ist. Dieses ist strömungsmäßig mit dem Airbag verbunden, sodass dieser durch Aktivierung des hier als Energiesystem dienenden Gebläses aufgeblasen werden kann. Zum Aufblasen des gefalteten Airbags sind nur wenige Sekunden notwendig.

Bei einem Aufprall wird der auf den aufgeblasenen Airbag wirkende Überdruck gemäß der vorliegenden Konstruktion direkt durch das Ventilationssystem entgegen der Aufblasrichtung herausgedrückt. Dabei wird die speziell definierte Umdrehungszahl des Gebläserotors reduziert. Ganz generell kann die Umdrehungszahl des Gebläserotors und damit die Geschwindigkeit des Aufblasens des Airbags und auch der insgesamt bis zum Aufprall erreichbare Überdruck unter Rücksichtnahme auf das Pilotengewicht eingestellt werden.

Ein Abbau des Überdrucks kann durch eine entsprechende Auswahl des zur Herstellung des Airbags verwendeten Materials bezüglich seiner Durchlässigkeit und/oder durch Vorsehen entsprechend geformter Ausblasöffnungen eingestellt werden.

Nach einem Aufprall kann das System vorteilhaft innerhalb einer definierten Zeitspanne selbstständig deaktiviert werden.

Im Gurtzeug ist ein Rettungsschirm oder Hauptfallschirm 24 in zusammengefalteter Form angeordnet. Dieser Rettungsschirm ist über eine Verbindungsleine 26 mit der Hauptaufhängung 12 verbunden. In der hier dargestellten Ausführungsform ist neben dem Rettungsschirm 24 ein Hilfsfallschirm 28 vorgesehen, der hier auch im Aufprallschutzelement 14 angeordnet ist. Dieser Hilfsfallschirm 28 ist über eine Verbindungsleine 30 mit dem Rettungsschirm 24 verbunden.

Aufgrund dieser Anordnung kann der Rettungsschirm 24 bei Aktivierung durch den Hilfsschirm 28 aus dem Gurtzeug gezogen werden.

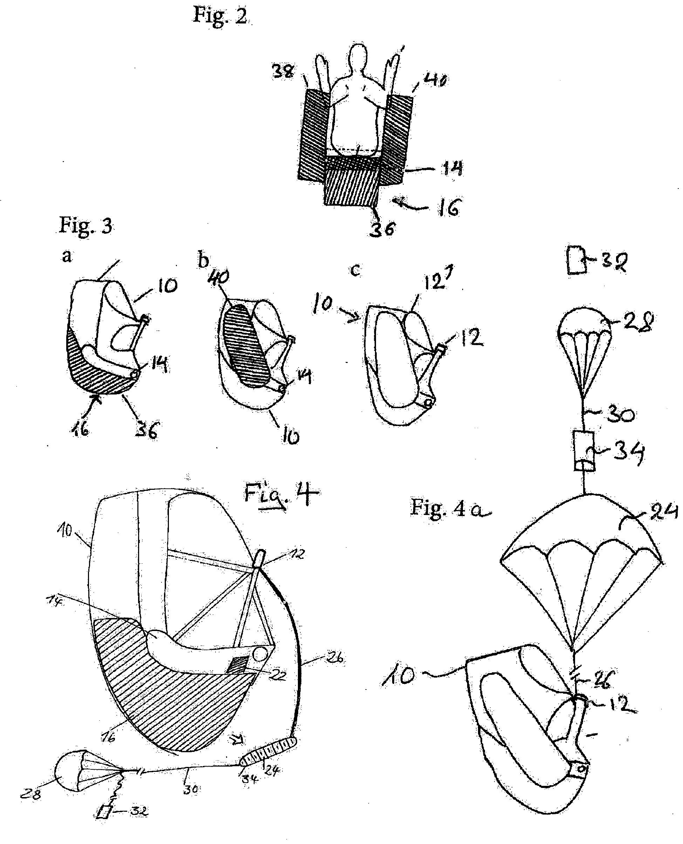

Das Fallschirmsystem kann durch den Piloten manuell mit reduziertem Kraftaufwand aktiviert werden. In hier nicht mehr dargestellter Weise kann der Hilfsfallschirm 28 über eine vorgespannte Feder zusammen mit einem mit ihm verbundenen Projektil aus dem Gurtzeug herausgeschossen werden. Grundsätzlich kann dieses System gegen Fehlauslösungen gesondert gesichert werden, sodass es vor Verletzungen Dritter geschützt ist. Nach Herausschießen des Hilfsfallschirms 28 spannt sich dieser auf und nach Spannen der Verbindungsleine 30 zum Rettungsschirm 24 wird dieser herausgezogen, sodass er über die Verbindungsleine mit der Hauptaufhängung 12 verbunden ist. Dies ist nach Entfalten des Hilfsfallschirms 28 und des Rettungsschirms 24 in der Figur 4 dargestellt. Dort ist auch das Projektil 32 dargestellt, das zusammen mit dem Hilfsfallschirm 28 durch die Entspannung der vorgespannten Feder (nicht dargestellt) herausgeschossen wird. Das Projektil 32 ist in Figur 4 in von Hilfsschirm 28 getrennter Position gezeigt. Durch den aerodynamischen Widerstand wird die Ausbringung des Rettungsschirms 24 maßgeblich verbessert und automatisiert.

Weitere Vorteile bei der Verwendung des vorteilhaft aus Kunststoff bestehenden Projektils 32 sind unter anderem der Schutz des Hilfsfallschirms 28 im alltäglichen Gebrauch. Des Weiteren kann die Kraft der vorgespannten Feder besser auf das Projektil übertragen werden. Durch Vorsehen des Projektils kann der Hilfsfallschirm auch sehr kompakt im Gurtzeug untergebracht werden, sodass insgesamt größere Hilfsfallschirme 28 verwendet werden können, was wiederum zur Reduzierung der Auslösezeit des Rettungsschirms 28 beiträgt. Dabei kann das Gewicht des aus Kunststoff bestehenden Projektils 32 so gering gewählt werden, dass die Gefahr für Dritte hinsichtlich einer Verletzung weitgehend reduziert werden kann.

Anstelle des Hilfsfallschirmsystems, das zuvor beschrieben wurde, könnte gegebenenfalls auch ein Raketentreibsatz oder CO₂ zum Ausbringen des Rettungsschirms 24 vorgesehen werden. Wie in Figur 1 dargestellt, ist das Ausbringungssystem für den Rettungsschirm so gewählt, dass eine Kollision mit dem Airbag 16 nicht erfolgt.

In der Fig. 4 und 4a wird deutlich, dass nach Entfaltung des Hilfsfallschirms 28 dessen Zugkraft genutzt wird, um den Rettungsschirm 24, welcher sich zunächst in einem Innencontainer 34 befindet, zu entfalten. Eine Fehlauslösung durch nicht genügende Differenzgeschwindigkeit kann bei diesem System sicher vermieden werden. Der Innencontainer 34, der in Figur 4 a schon in getrennter Position vom Rettungsschirm 24 gezeigt ist, dient im eingebauten Zustand im Gurtzeug zum Schutz des Rettungsschirms 24.

Im Zusammenspiel mit dem Airbag 16 wird der Aufhängungspunkt des Rettungsschirms 24 an der Hauptaufhängung 12 vorgesehen (vergl. auch Figur 3c). Sollte das System ohne einen Airbag 16 Anwendung finden, so kann auch eine konventionelle Aufhängung 12¹ entsprechend Figur 3c gewählt werden.

Die Figur 2 zeigt eine schematische Darstellung einer Rückansicht des Sicherheitssystems, bei dem der Airbag 16 ausgelöst ist. Der Airbag 16 besteht hier aus dem unterhalb des Aufprallschutzelements 14 angeordneten Hauptkammer 36 und den beiden seitlich angeordneten Seitenkammern 38 und 40. In .der Figur 2 sind die Kammern 36, 38 und 40 des Airbags 16 vollständig aufgeblasen.

In der Figur 3a ist das Gleitschirmgurtzeug 10 mit dem Aufprallschutzelement 14 und dem unter diesem angeordneten und aufgeblasenen Airbag 16 mit seiner Hauptkammer 36 dargestellt. In der Figur 3b ist der Seitenairbag 40 in aufgeblasener Form dargestellt.

## Patentansprüche

1. Sicherheitssystem für ein Gleitschirmgurtzeug mit einem aus geformten Schaumstoff (14) und mit Staudruck gefüllten Luftsack (18) gebildeten Aufprallschutzelement und einem im oder am Gurtzeug integrierten Rettungsschirm,
wobei das aus Schaumstoff bestehende Aufprallschutzelement (14) die Form einer Sitzschale aufweist und dass zusätzlich zu dem Aufprallschutzelement ein über ein Energiesystem, beispielsweise ein Gebläse, aufblasbares Airbagsystem (16) im Gurtzeug integriert ist, das im aufgeblasenen Zustand aus einer unterhalb des Aufprallschutzelements (14) angeordneten Hauptkammer (36) und zwei seitlich angeordneten Seitenkammern (38, 40) besteht.

2. Sicherheitssystem nach Anspruch 1, **dadurch gekennzeichnet, dass** bei Aktivierung des Airbagsystems zunächst die Hauptkammer unter dem Gurtzeug aufblasbar ist, bevor die seitlich von diesem angeordneten Seitenkammern aktivierbar sind.

3. Sicherheitssystem nach Anspruch 2, **dadurch gekennzeichnet, dass** die Hauptkammer und die Seitenkammern des Airbagsystems miteinander verbunden sind, wobei mehrere Durchlassöffnungen für einen Druckausgleich zwischen Hauptkammer und Seitenkammern sorgen.

4. Sicherheitssystem nach einem der Ansprüche 1 bis 3, **dadurch gekennzeichnet, dass** am Gurtzeug mittig bezogen auf die Sitzposition des Nutzers ein Aktivierungselement zur Auslösung des Airbags vorgesehen ist.

5. Sicherheitssystem nach einem der vorhergehenden Ansprüche, **dadurch gekennzeichnet, dass** das Airbagsystem so angeordnet ist, dass es bei seiner Entfaltung den Rettungsschirm zwangsweise aus dem Gurtzeug drückt, so dass sich dieser entfalten kann.

6. Sicherheitssystem nach einem der Ansprüche 1 - 5, **dadurch gekennzeichnet, dass** im oder am Gurtzeug ein Hilfsfallschirm angeordnet ist, der über einen Energiespeicher, beispielsweise in Form einer Feder, einer CO₂ enthaltenden Treibladung, pyrotechnisch, elektrisch und/ oder in Form anderer Aktuatoren, aktivierbar ist.

7. Sicherheitssystem nach Anspruch 6, **dadurch gekennzeichnet, dass** der Hilfsfallschirm über ein vorzugsweise aus Kunststoff bestehendes Projektil aus dem Gurtzeug herausschießbar ist, wobei er nach Streckung der Hilfsfallschirmleinen vom Projektil trennbar ist.

8. Sicherheitssystem nach Anspruch 6 oder 7, **dadurch gekennzeichnet, dass** die Ansteuerung zur Aktivierung des Energiespeichers und/oder Airbagsystems über Sensoren, GPS oder in sonstiger Weise ferngesteuert erfolgt.

9. Sicherheitssystem nach einem der Ansprüche 1 bis 6, **dadurch gekennzeichnet, dass** der Rettungsschirm pyrotechnisch ausbringbar ist.

10. Sicherheitssystem nach einem der vorherigen Ansprüche, **dadurch gekennzeichnet, dass** der Rettungsschirm durch die Aktivierung des Airbagsystems und die damit verbundene Entfaltung des Airbag-Elements aktiv aus dem Gurtzeug herausdrückbar ist.

11. Sicherheitssystem nach einem der vorherigen Ansprüchen, **dadurch gekennzeichnet, dass** das Gebläse in dem aus Schaumstoff bestehenden Aufprallschutz integriert ist.

12. Sicherheitssystem nach einem der Ansprüche 1 - 4, **dadurch gekennzeichnet, dass** der Rettungsschirm an der Außenseite des Gurtzeuges angeordnet ist.

## Claims

1. Safety system for a paraglider harness comprising an impact protection element that is formed by an air cell (18) that is formed of shaped foam (14) and filled by dynamic pressure, and an emergency parachute that is integrated in or on the harness, wherein the foam impact protection element (14) is in the shape of a seat shell, and that, in addition to the impact protection element, an airbag system (16) that can be inflated by means of an energy system, for example a fan, is integrated in the harness, which airbag system, when inflated, consists of a main chamber (36) arranged under the impact protection element (14) and two laterally arranged side chambers (38, 40).

2. Safety system according to claim 1, **characterised in that**, when the airbag system is activated, firstly the main chamber under the harness can be inflated, before the side chambers, arranged laterally thereto, can be activated.

3. Safety system according to claim 2, **characterised in that** the main chamber and the side chambers of the airbag system are interconnected, wherein a plurality of outlet openings ensures pressure compensation between the main chamber and the side chambers.

4. Safety system according to any of claims 1 to 3, **characterised in that** an activation element for triggering the airbag is provided on the harness so as to be central with respect to the sitting position of the user.

5. Safety system according to any of the preceding claims, **characterised in that** the airbag system is arranged such that, when it is deployed, it forcibly pushes the emergency parachute out of the harness, such that said parachute can deploy.

6. Safety system according to any of claims 1 to 5, **characterised in that** a pilot parachute is arranged in or on the harness, which parachute can be activated using an energy storage means, for example in the form of a spring, a CO2-containing propellant, pyrotechnically, electrically and/or using another form of actuators.

7. Safety system according to claim 6, **characterised in that** the pilot parachute can be pushed out of the harness by means of a projectile that preferably consists of plastics material, wherein said parachute can be separated from the projectile after the pilot parachute cords have been extended.

8. Safety system according to either claim 6 or claim 7, **characterised in that** the actuation for activating the energy storage means and/or the airbag system is achieved by means of sensors, GPS or via remote control in another manner.

9. Safety system according to any of claims 1 to 6, **characterised in that** the emergency parachute can be launched pyrotechnically.

10. Safety system according to any of the preceding claims, **characterised in that** the emergency parachute can be actively pushed out of the harness by means of activation of the airbag system and the associated deployment of the airbag element.

11. Safety system according to any of the preceding claims, **characterised in that** the fan is integrated in the foam impact protector.

12. Safety system according to any of claims 1 to 4, **characterised in that** the emergency parachute is arranged on the outside of the harness.

## Revendications

1. Système de sécurité destiné à un harnais de parachute avec un élément de protection antichoc constitué d'un sac d'air (18) rempli de mousse (14) moulée et de pression dynamique et un parachute de secours intégré dans le harnais, sachant que l'élément de protection antichoc constitué de mousse (14) présente la forme d'un plateau de siège et qu'outre l'élément de protection antichoc est intégré dans le harnais un système d'airbag (16) gonflable via un système d'énergie, par exemple un ventilateur, qui se compose à l'état gonflé d'une chambre principale (36) disposée au-dessous de l'élément de protection antichoc (36) et de deux chambres de flancs (38, 40) disposées latéralement.

2. Système de sécurité selon la revendication 1, **caractérisé en ce qu'**en cas d'activation du système d'airbag, la chambre principale au-dessous du harnais est d'abord gonflable, avant que les chambres de flancs disposées latéralement de celui-ci soient activables.

3. Système de sécurité selon la revendication 2, **caractérisé en ce que** la chambre principale et les chambres de flancs du système d'airbag sont reliées entre elles, sachant que plusieurs ouvertures de passage assurent une compensation de pression entre la chambre principale et les chambres de flancs.

4. Système de sécurité selon une quelconque des revendications 1 à 3, **caractérisé en ce que** sur le harnais, un élément d'activation destiné au déclenchement de l'airbag est prévu de manière centrée par rapport à la position de siège de l'utilisateur.

5. Système de sécurité selon une quelconque des revendications précédentes, **caractérisé en ce que** le système d'airbag est disposé de manière à ce qu'il repousse de force le parachute de secours hors du harnais lors de son déploiement, de sorte que celui-ci puisse se déployer.

6. Système de sécurité selon une quelconque des revendications 1-5, **caractérisé en ce que** dans le harnais ou sur celui-ci est disposé un parachute auxiliaire qui est activable via un accumulateur d'énergie, par exemple sous la forme d'un ressort, d'une charge propulsive contenant du CO2, pyrotechniquement, électriquement et/ou sous la forme d'autres actionneurs.

7. Système de sécurité selon la revendication 6, **caractérisé en ce que** le parachute auxiliaire est jaillissable hors du harnais via un projectile composé de préférence en plastique, sachant qu'il est séparable du projectile après l'extension des cordes de parachute auxiliaire.

8. Système de sécurité selon les revendications 6 ou 7, **caractérisé en ce que** l'amorçage en vue de l'activation de l'accumulateur d'énergie et/ou du système d'airbag s'effectue par capteurs, par GPS ou de manière autrement télécommandée.

9. Système de sécurité selon une quelconque des revendications 1 à 6, **caractérisé en ce que** le parachute de secours est levable pyrotechniquement.

10. Système de sécurité selon une quelconque des revendications précédentes, **caractérisé en ce que** le parachute de secours est extractible activement hors du harnais par l'activation du système d'airbag et par le déploiement associé de l'élément d'airbag.

11. Système de sécurité selon une quelconque des revendications précédentes, **caractérisé en ce que** le ventilateur est intégré dans la protection antichoc constituée de mousse.

12. Système de sécurité selon une quelconque des revendications 1-4, **caractérisé en ce que** le parachute de secours est disposé sur le côté extérieur du harnais.
